# EUROPEAN PATENT SPECIFICATION

(11) **EP 3 360 008 B1**
(45) Date of publication and mention of the grant of the patent: **04.12.2024**
(21) Application number: 15905939.3
(22) Date of filing: 07.10.2015
(51) Int. Cl.: G02F 1/1503, G02F 1/161, G02F 1/1516, G02F 1/1514

(54) **METHOD OF MANUFACTURING AN ELECTROCHROMIC PANEL**
VERFAHREN ZUR HERSTELLUNG EINER ELEKTROCHROMEN TAFEL
PROCÉDÉ DE FABRICATION D'UN PANNEAU ÉLECTROCHROMIQUE

(43) Date of publication of application: 15.08.2018
(60) Divisional application: 24204362.8
(73) Proprietor: Vitro Flat Glass LLC, Cheswick, PA 15024 (US)
(72) Inventor: VASILIEV, Evgeniy, Vladimirovich, Novosibirsk 630090 (RU); BORISOV, Sergey, Olegovich, Novosibirsk 630090 (RU); ZAIKIN, Pavel, Anatolievich, Novosibirsk 630090 (RU); KRUGLIKOV, Nikita, Valerievich, Novosibirsk 630090 (RU)
(74) Representative: Sandri, Sandro
(86) International application number: PCT/US2015/054337
(87) International publication number: WO 2017/061996

(56) References cited:
- CN-A- 103 116 239
- US-A- 5 080 470
- US-A- 5 774 255
- US-A- 6 067 184
- US-A1- 2006 050 357
- US-A1- 2010 315 693
- US-B2- 7 256 925

## Description

### BACKGROUND OF THE INVENTION

### Field of the Invention

The invention relates to the field of devices that change color under the effect of an electric current, in particular, to electrochromic devices and methods of their manufacture. Various methods for manufacturing devices with electrically adjustable light-absorption properties, such as variable optical density filters, light modulators, information boards, and image-display panels are known in the art.

### Description of the Related Art

Electrochromism is a physical phenomenon found in certain compositions of reversibly changing predetermined optical properties such as color or light transmittance with an application of an electrical voltage called a control voltage. Electrochromism provides the basis for operation of various electrochromic devices, such as smart glass well known to persons of ordinary skill in the art. Various types of optical materials and structures can be used to construct the aforesaid compounds with electrochromic properties, with the specific structures being dependent on the specific purpose of the electrochromic device.

Known in the art is a method of manufacturing an electrochromic device (U.S. Patent No. 4,902, 108) wherein an electrically conductive coating of one of two optically transparent electrodes is coated with a thickened solution of polymethylmethacrylate in a low-boiling-point solvent, the solvent then evaporating to yield a layer of polymethylmethacrylate. Following this step, both optically transparent electrodes bond to each other on the perimeter while the electrodes are spaced at a predetermined distance from one another, and the thus-formed space is filled through an opening (openings) in the adhesive with an electrochromic solution that contains cathodic and anodic components; the filled space is then sealed. The layer of polymethylmethacrylate is dissolved, and, as a result, the electrochromic solution thickens, and this significantly reduces the negative effect of gravitational "delamination" of the composition in the electrically colored state. Thus, the electrochromic composition is actually prepared only after the completion of the assembly of the aforementioned electrochromic device. In addition, the electrochromic composition is a liquid phase having viscosity defined by the amount of polymeric thickener, and the indifferent electrolyte solution introduced into the electrochromic solution provides electroconductivity of the latter if the cathodic and anodic components are not soluble in the ionic state. An indifferent electrolyte is introduced into compositions based on quaternary salts of bipyridine.

Also known in the art is a method for manufacturing an electrochromic device (U.S. Patent No. 5,471,337) wherein the space between the electrodes is filled with an electrochromic dispersion system comprising the following: a dispersion medium in the form of a solvent that is thickened, preferably, with polymethylmethacrylate or is plasticized with a polymer solvent; a dispersion phase in the form of polyoxomethalate as the cathodic component; and an anodic component.

Additionally known are methods for making an electrochromic device by obtaining a solid-like film of an electrochromic composition directly in the device itself by polymerization alone and/or polymerization with crosslinking of monomer chains with the use of initiators of different types (EP 0612826 A1; WO 97/34186; and WO 98/42796). However, such polymerization reactions are accompanied by volume shrinkage adversely affecting the quality of the electrochromic device. This negative effect can be particularly manifested in electrochromic devices with large interelectrode spaces (1 to 2 mm) usually provided in electrochromic devices having large work surfaces (more than 0.5 m2).

Also known in the art is a method for manufacturing a flexible electrochromic panel, which is disclosed in U.S. Patent No. 7,826,124 B2, wherein insoluble polymeric chains of an organic material are applied onto one of the electrodes by electrochemical polymerization, and an ion storage film interacting with the polymeric chains of the first electrode is applied onto the counter electrode. A serious drawback of this technique is that a liquid electrolyte is needed for an effective interaction between the two layers deposited onto the flexible electrodes. On the other hand, the presence of a liquid electrolyte requires additional efforts and/or structures to maintain the electrochromic panel at a fixed thickness, and this, in turn, significantly complicates both the structure and method of the device manufacture.

Furthermore, also known in the art is a method for manufacturing a flexible electrochromic panel disclosed in U.S. Patent No. 7,256,925 B2, which involves locally applying, onto one of the electrodes, a semiconductor layer, which is then coated with an electrochromic composition. However, this design also requires the use of a liquid electrolyte between the electrochromic layer and the counter electrode, which makes it subject to the same drawbacks as the previously discussed method.

Moreover, US 2010/315693 A1 discloses variable transmittance optical filters capable of transitioning from a light state to a dark state on exposure to UV radiation and from a dark state to a light state with application of an electric voltage. The optical filters comprise a switching material that comprises one or more chromophores that have electrochromic and photochromic properties.

Document US 2006/050357 A1 discloses a method for producing electrochromic devices. The electrochromic device comprises at least two electrodes, at least one of them being optically transparent. A closed sealed space is formed between said electrodes and filled with the electrochromic compound which is embodied in the form of a solid-like film. The method for producing the electrochromic device consists in prefabricating an initial electrochromic compound in the form of a dispersed electrochromic system which contains at least a suspension and/or colloid. The dispersed medium of said system is embodied in the form of an electrochromic solution containing a liquid solvent, cathode and anode components, a disperse phase being embodied in the form of a finely dispersed polymer. Afterwards, the initial electrochromic compound is deaerated, thereby eliminating dissolved oxygen and air introduced by said finely dispersed polymer, and is used for filling the space between the electrodes.

Therefore, new and improved methods for manufacturing of electrochromic devices are needed that would not be subject to the above deficiencies of the conventional technology.

### SUMMARY OF THE INVENTION

The present invention is directed to a method that substantially obviates one or more of the above and other problems associated with conventional methods for manufacturing electrochromic devices.

In accordance with one aspect of the present invention, there is provided a method of fer manufacturing an electrochromic panel comprising the steps disclosed at claim 1. The dependent claims outline advantageous ways of carrying out the method.

In various embodiments, electrochromic panels are manufactured using flexible, optically transparent electrodes that comprise a polymeric (particularly polyethylene terephthalate) substrate, or a glass substrate coated on one side thereof with a transparent conductive coating. Coating of a polymeric substrate may be produced, for example, by applying a doped indium oxide (In₂O₃) or a doped tin oxide (SnO₂), or a metal mesh, or both of them simultaneously. A conductive coating is applied to the polymeric substrate in the form of mutually isolated square shaped portions. Application of a transparent conductive coating may be made by vacuum deposition of films of metals, metal oxides, metal nitrides through a template; or by printing using of a conductive ink.

In various embodiments, the final configuration of the electrochromic panel is determined by the configuration of the layers of conductive coatings disposed on the polymeric substrate, which are electrically insulated from one another. In particular, using the aforesaid conductive layers of square shape allows to manufacture the electrochromic panel having a shape of a matrix.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

It is to be understood that both the foregoing and the following descriptions are exemplary and explanatory only and are not intended to limit the claimed invention or application thereof in any manner whatsoever.

### BRIEF DESCRIPTION OF THE DRAWINGS

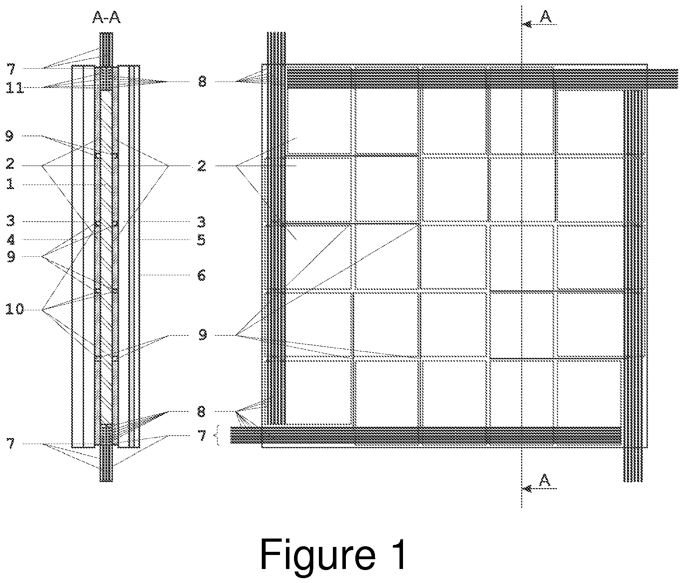

The accompanying drawings, which are incorporated in and constitute a part of this specification exemplify the embodiments of the present invention and, together with the description, serve to explain and illustrate principles of the inventive technique. Specifically: Figure 1 shows an electrochromic panel with two optically transparent electrodes in the form of twenty five mutually isolated current- conductive square-shaped portions.

### DETAILED DESCRIPTION

Not according to the claimed invention, but useful for understanding the invention, there is provided an electrochromic device with an electrochromic composition in the form of a solid polymer layer that has an increased rate of discoloration in a wide temperature range and that imparts stability to the electrochromic device operating under conditions that maintain a long-term colored state and allow for low-voltage control and change of electrode polarity, which result in long-term uniformity of coloration and discoloration, especially for electrochromic devices having large work surface areas. Exemplary electrochromic compositions usable in connection with the described electrochromic device are disclosed in document EP 3360007 B1.

Not according to the claimed invention, but useful for understanding the invention, there is provided an electrochromic device comprising at least two electrodes, wherein the electrodes are flexible and optically transparent and the interelectrode space is sealed and filled with the prepared electrochromic composition, as described above. The described device achieves long-term stability of a colored state and may operate under conditions that allow for low-voltage control and reversal of electrode polarity, resulting in uniformity of coloration and discoloration. In addition, the described electrochromic device may be manufactured to have a large surface area.

According to one or several aspects of the invention, an electrochromic panel is obtained by manufacturing an electrochromic device comprising at least two electrodes that are flexible and optically transparent with a hermetically closed space between the electrodes, which is filled with an electrochromic composition. According to one or several aspects, the method of the invention comprises the following steps:

(1) preparing an initial electrochromic composition in the form of an electrochromic disperse system comprising a suspension and/or a colloid, wherein the dispersion medium contains a high-temperature liquid solvent, a low-temperature liquid solvent, a cathodic component, and an anodic component. The dispersed phase comprising a finely divided polymer. The initial electrochromic composition having a relatively low viscosity and is suitable for application by different methods well known in the art, such as gravitational spreading, substrate immersion coating, roll coating, dip coating, spin coating, flow coating or the like;

(2) manufacturing of at least one of the flexible electrodes in such a manner that the conductive coating is applied onto the polymeric substrate in the form of mutually isolated conductive layers of a square shape arranged in a matrix; the second flexible electrode being optionally manufactured in the same manner or being made solid; (3) coating at least one of the flexible electrodes with an initial electrochromic composition; (4) drying the initial electrochromic composition applied onto the flexible electrode(s) for removing the low-temperature solvent to form a solid homogeneous uniform electrochromic layer; (5) stitching (laminating) one flexible electrode with a second flexible electrode, the second flexible electrode being optionally made with a solid uniform electrochromic layer; (6) connecting the flexible electrodes to electrically conducting buses; and (7) sealing the electrochromic panel over the perimeter.

In one or more embodiments, the aforesaid electrochromic solution may additionally contain an indifferent electrolyte. Provision of an indifferent electrolyte additionally introduced into the dispersion medium accelerates discoloration of the electrically activated electrochromic device and prevents violation of uniformity in coloration and discoloration after operation of the electrochromic device under conditions of long-term polarization with application of DC voltage and/or after application of high (excessive, breakdown) voltage.

In one or more embodiments, it is desirable to use a finely divided polymer and a high-temperature solvent in quantities and ratios sufficient to form a solid, but flexible layer of an electrochromic composition, which is characterized by lack of brittleness when bent, can provide flexibility, and keep its integrity over a wide temperature range.

In one or more embodiments of the method, the low-temperature solvent is used to impart to the initial electrochromic composition low viscosity to allow the formation of an electrochromic layer on different substrates by known industrial methods such as gravitational spreading, substrate immersion coating, roll coating, dip coating, spin coating, flow coating or the like. In one or more embodiments, after the low-temperature solvent is removed (e.g., by evaporating, including evaporation by heating), a solid but flexible electrochromic layer is formed on the substrate.

In one or more embodiments, one or both of the aforesaid low- temperature and high-temperature solvents, may comprise an individual chemical compound or mixture of chemical compounds.

In one or more embodiments, the cathodic component is an individual organic electrochromic compound having at polarograms at least one reversible reduction wave or a mixture of such organic electrochromic compounds. The anodic component is an individual organic electrochromic compound having at polarograms at least one reversible oxidation wave or a mixture of organic electrochromic compounds.

In one or more embodiments, the composition may further contain UV stabilizers, which protect the electrochromic composition from UV radiation.

The composition also may additionally contain antioxidants that protect the electrochromic composition from adverse effects caused by its exposure to oxygen.

In one or more embodiments, all the procedures relating to the manufacture and assembly of the electrochromic device are carried out in an atmosphere of inert gas such as argon, nitrogen, carbon dioxide, etc. This will reduce the adverse effects of atmospheric oxygen on the electrochromic composition.

In one or more embodiments the aforementioned electrochromic device is manufactured by using flexible, optically transparent electrodes, which consist of a polymeric (e.g., polyethylene terephthalate), or a glass substrate coated on one side with a transparent conductive layer such as doped indium oxide (In₂O₃), or doped tin oxide (SnO₂), or a metal mesh. Such coatings can be used individually or in combinations.

The electrodes are sealed so that the conductive coating appears inside the closed space formed between the electrodes and filled with the electrochromic layer to prevent contact between the electrodes. A distance between the electrodes is determined by the thickness of the solid electrochromic layer, which is obtained after the electrochromic liquid composition has dried.

In one or more embodiments of the manufacture, the electrochromic device is provided with electrically conducting buses arranged over the outer perimeter or along the long sides of the electrodes. These electrically conducting buses can be located either directly outside or inside the device with externally located output wires or other types of electrical contacts or connectors.

Fig. 1 shows an electrochromic panel with two optically transparent electrodes in the form of twenty-five conductive mutually isolated square- shaped portions. Also shown is a cross-sectional view of the electrochromic panel. The illustrated electrochromic panel contains flexible, optically transparent square-shaped electrodes 2, which are applied to a pair of substrates 3 in a quantity of twenty-five per each substrate. The substrates 3 are polymeric films, the surface area of which depends on the specific use of the electrochromic panel. A space between the substrates 3 with the square-shaped optically transparent electrodes 2 applied onto their surfaces is filled with an electrochromic layer 1.

In one or more embodiments, electric current-conducting buses 7 are routed over the perimeter or along some sides of the electrochromic panel. The dimension of these electrically conducting buses 7 depends on the quantity of square shaped conductive portions. Alternatively, it is possible to use double electrically conducting buses 7 for the upper and lower transparent conductive electrodes, respectively. The cross-sectional diameter of bus conductors 8 that form the buses 7 is determined on the basis of the area occupied by the conductive portions 2 and properties of the electrochromic layer 1.

The conductive portions 2, which are arranged along the periphery of the electrochromic panel, are directly electrically connected to the corresponding conductors of eight electrically conducting buses 7. The device is also provided with conductive contact line 9 intended for connection to the respective buses (lines) of those internal conductive portions 2, which are located not at the periphery of the electrochromic panel. Each conductive contact line 9 is guided to one conductive portion and is isolated from other lines. The other end of the each conductive contact line is connected to a predetermined conductor 8 of the electrically conducting bus 7.

In one or more embodiments, the electrochromic layer 1 is located between the transparent conductive electrodes. The electrochromic layer may be continuous without breaks at the boundaries of the conductive portions 2. The thickness of the electrochromic layer is determined based on the properties of the electrochromic composition and the requirements for the electrochromic panel. The electrochromic layer may be different in composition and properties at different portions corresponding to different conductive portions. Accordingly, the electrochromic layer may be colored in different colors at different portions corresponding to different conductive portions. The electrochromic layer may be different in composition and properties within the limits of a portion of a conductive layer corresponding to a certain conductive square shaped portion. Accordingly, the electrochromic layer may be colored in different colors within the limits of one portion that corresponds to a predetermined conductive square shaped portion.

In one or more embodiments, the conductive square shaped portions arranged over the perimeter of the electrochromic panel can be connected by means of a conductive compound 11. Connection of the conductive contact lines 9 with the inner conductive square shaped portions (which are located not on the panel periphery) also can be made with the conductive compound 11.

In one or more embodiments, the sealing of the electrochromic layer of the electrochromic panels is effected either by gluing loops around the perimeter of the panel or by using sealants that prevent the penetration of atmospheric oxygen into the electrochromic layer.

In one or more embodiments, an adhesive layer 5 that ensures adhesion of the electrochromic panel to the glass can be applied onto the panel-facing side of the electrochromic panel. The adhesive layer 5 that ensures adhesion of the electrochromic panel to the glass can be coated with a peelable protective film 6. Before attaching the electrochromic panel to the glass, the protective film 6 is removed. Any other self- adhesive tapes can be used instead of the adhesive layer 5.

In one or more embodiments, the transparent conductive electrodes of the electrochromic panel facing outward also may be coated with protective layers 4. The protective layers 4 may comprise layers that protect the electrochromic panel from mechanical effects, as well as from UV and IR radiation. The use of a single layer that combines all these protective properties is also an option.

Fig. 1 illustrates a design in which the electrochromic panel has conductive layers having a square configuration. In such a design the electrochromic panel has a common electrochromic layer 1 disposed between two flexible transparent conductive electrodes. Each transparent conductive electrode comprises a polymeric substrate 3 coated with a conductive metal mesh 2 divided into square portions. In total, twenty five square conductive portions are used. Arranged over the periphery (perimeter) of the electrochromic panel are electrically conducting buses 7. Each such bus 7 contains six or seven electrically conducting wires 8.

The square conductive portions 2 arranged over the periphery (perimeter) of the panel are connected to the electrically conducting buses 7 by means of the compound 11, while those square conductive portions which are located inside the electrochromic panel are connected to the perimeter of the electrochromic panel by conductive contact lines 9. Along the perimeter of electrochromic panel the conductive contact lines 9 are connected to the bus wires 8 by means of conductive compound 11.

Gaps between the square conductive portions 2 are filled with an insulating compound 10.

One of the flexible transparent conductive electrodes of the electrochromic panel is coated with the adhesive layer 5, which, in turn, is coated with the protective film 6. Another flexible transparent conductive electrode of the electrochromic panel is coated with the protective layer 4.

The electrically conducting buses 7 arranged over the periphery (perimeter) of the electrochromic panel are connected to the control unit / power supply (not shown) which supplies the required voltage and current to each square conductor portion 2.

### Example 1

In the first example, an electrochromic device was made with two flexible, optically transparent electrodes. Each flexible electrode comprised a polyethylene terephthalate substrate having a thickness of 175 microns and coated with a single layer of indium-doped SnO₂ having the surface electrical resistance of 30 Ohm/cm². The size of each electrode was 5×6 cm². One electrode was uniformly coated with an electrochromic composition that contained the following components: a viologen derivative (1.5 mass%) and a ferrocene derivative (0.75 mass%) in the solvents propylene carbonate and acetone; and a dispersed phase (35 mass%) of a copolymer of polymethyl methacrylate, methacrylic acid, and a calcium salt of the latter. The electrochromic composition was dried for 20 hours to form a solid electrochromic layer on the flexible electrode having a thickness of 100 microns. Then, a second flexible electrode was laminated over the dried electrochromic layer at a temperature of 100°C with a 5 mm offset with respect to the first layer. Copper tapes connectable to the leads of the control/power unit were then pasted by means of a conductive adhesive composition to the uncoated areas of the flexible electrodes facing the conductive coatings.

In this embodiment the electrochromic device had light transmission in the visible range of the spectrum equal to 75%. Supply to the device of 2V DC current changed its color to intensive blue. The time of full color change from clear to dark blue was 7 seconds. After completion of the transient period, the application of voltage was stopped and the electrodes were short-circuited. The electrochromic device returned to its original (transparent) state within about 10 seconds.

### Example 2

In the second example, the electrochromic device was manufactured by the same way as described in Example 1, except that each flexible electrode comprised a polyethylene terephthalate substrate having a thickness of 100 microns coated with a metallic copper mesh with a cell size of 300 microns and with the surface electrical resistance equal to 2 Ohm/cm².

In this embodiment of the electrochromic device, the light transmission in the visible range of the spectrum was 80%. Supply to the device of DC 2V current changed the color of its electrochromic layer to the intense blue. Time of full color change from clear to dark blue was 4 seconds. After completion of the transient period, the application of voltage was stopped and the electrodes were short-circuited. The electrochromic device returned to its original (transparent) state within about 6 seconds.

### Example 3

In the third example, the electrochromic device was manufactured by the same way as described in Example 2, except that the electrochromic composition was applied uniformly to each electrode in the half amount. After drying of the electrochromic layers, the flexible electrodes were laminated with the applied layers facing each other. Such a treatment made it possible to obtain the electrochromic device with uniform adhesion of the electrochromic layer to the flexible electrodes.

In this embodiment, an electrochromic device had a light transmission in the visible range of the spectrum equal to 80%. Supply to the device of DC 2V current changed the color of its electrochromic layer to the intense blue. Time of full color change from clear to dark blue was 4 seconds. After completion of the transient period, the application of voltage was stopped and the electrodes were short-circuited. The electrochromic device returned to its original (transparent) state within about 6 seconds. In this case, the electrochromic layer showed more uniform color than in the case of the device described in Example 2.

### Example 4

In the fourth example, the electrochromic device was manufactured by the same way as described in Example 3, except that one of the flexible electrodes comprised a polyethylene terephthalate substrate having dimensions of 12×10 cm² and a thickness of 100 microns coated with a metallic copper mesh divided into four bands, each of which had dimensions of 3×10 cm². The second flexible electrode comprised a polyethylene terephthalate substrate having dimensions of 12×10 cm² coated with a continuous metallic copper mesh. In the completed state the flexible electrode with a continuous copper mesh was connected to one wire of the bus, while each flexible copper band of the second flexible electrode was connected to a separate wire of the bus.

In this embodiment of the electrochromic device, the flexible electrode with a continuous copper mesh obtained a 0 potential, while each copper band of the second flexible electrode could be independently supplied with -2V, 0, or +2 V. When any of the bands received -2V or +2V, the electrochromic layer of this band within 5 seconds changed its color to intense blue. Change of the voltage to the opposite one led within 2 seconds to discoloration of the respective band to 50% of the initial darkening and then to restoration of intense blue color over a time of about 2 seconds.

### Example 5

In the fifth example, the electrochromic device was manufactured by the same way as described in Example 4, except that one of the flexible electrode comprised a polyethylene terephthalate substrate having the size of 10×10 cm² and the thickness of 100 microns with a metallic copper mesh applied onto this flexible electrode and divided into nine squares each having dimensions of 2.6 c 2.6 cm². The square located in the middle had a contact line disposed in the gap between the other squares guided to the contact pad located on the edge of the flexible electrode. The second flexible electrode comprised a polyethylene terephthalate substrate having dimensions of 10×10 cm² and coated with a continuous metallic copper mesh. In the completed state the flexible electrode with a continuous copper mesh was connected to one wire of the bus, while each flexible copper band of the second flexible electrode was connected to a separate wire of the bus.

In this embodiment of the electrochromic device, the flexible electrode with the solid copper mesh was set to a zero potential, while each square copper electrode of the second flexible electrode could independently receive the potentials of -2 V, 0, or +2 V. When any of the squares received potentials of -2 or +2, the color of the electrochromic layer of the respective band changed within 4 seconds to intense blue.

To accelerate the discoloration of any square portion of the electrochromic device, first the opposite potential was applied to provide 50% discoloration, and then this square portion was short-circuited with the second flexible electrode. In this case, discoloration of the respective square portion occurred within 4 seconds.

## Claims

1. A method of manufacturing an electrochromic panel comprising two flexible electrodes (2) and a hermetically closed space between the two flexible electrodes, at least one of the two flexible electrodes being optically transparent, wherein the hermetically closed space between the two flexible electrodes is filled with an electrochromic composition (1), the method comprising:
(1) preparing an initial electrochromic composition in the form of an electrochromic dispersion system containing at least one of a suspension and a colloid, wherein a dispersion medium of the electrochromic dispersion system comprises an electrochromic solution comprising a high-temperature solvent and a low-temperature solvent, a cathodic component and an anodic component, wherein a dispersion phase of the electrochromic dispersion system comprises a finely divided polymer;
(2) manufacturing at least one of the two flexible electrodes in such a manner that a conductive coating is applied onto a polymeric substrate (3) in the form of mutually isolated conductive portions of a square shape arranged in a matrix;
(3) coating at least one of the flexible electrodes with the initial electrochromic composition;
(4) drying the initial electrochromic composition applied onto the flexible electrode(s) for removing the low-temperature solvent to form a solid homogeneous uniform electrochromic layer;
(5) laminating the flexible electrode with the dried electrochromic composition with the other flexible electrode;
(6) connecting all the portions of the flexible electrodes to electrically conducting buses (7); and
(7) sealing the hermetically closed space between the two flexible electrodes.

2. The method of claim 1, wherein the electrochromic solution further comprises an indifferent electrolyte.

3. The method of claim 1, wherein the initial electrochromic composition is coated on the at least one of the flexible electrodes by gravitational spreading, immersion coating, roll coating, dip coating, spin coating, or flow coating.

4. The method of claim 1, wherein the high-temperature solvent and/or the low-temperature solvent individually or in combination comprise a chemical compound or mixture of chemical compounds.

5. The method of claim 1, wherein the cathodic component is an individual organic electrochromic compound having at polarograms at least one reversible reduction wave.

6. The method of claim 1, wherein the anodic component is an individual organic electrochromic compound having at polarograms at least one reversible oxidation wave.

7. The method of claim 1, further comprising a drying the applied initial elechtrochromic composition to complete removal of the low-temperature solvent to form a solid but flexible electrochromic layer.

8. The method of claim 1, further comprising steps of applying a half amount of the initial electrochromic composition onto each of the two flexible electrodes; drying the applied initial electrochromic composition; and laminating a first of the two flexible electrodes with a second of the two flexible electrodes.

9. The method of claim 1, wherein the initial elechtrochromic composition further comprises an ultra-violet blocking additive.

10. The method of claim 1, wherein the initial elechtrochromic composition further comprises an antioxidant.

11. The method of claim 1, further comprising applying onto the electrochromic panel a protective layer for protection from infrared radiation.

12. The method of claim 1, wherein the two flexible electrodes comprise polymeric substrates coated on one side thereof with a transparent electrically conductive layer of doped indium oxide or doped tin oxide.

13. The method of claim 12, wherein the polymeric substrates are polyethylene terephthalate substrates.

14. The method of claim 12, wherein the two flexible electrodes are hermetically bonded around the perimeter so that the transparent electrically conductive layer is located within a closed space defined between the two flexible electrodes.

15. The method of claim 14, wherein the bond between the two flexible electrodes comprises a spacer to provide a predetermined distance between the two flexible electrodes.

## Patentansprüche

1. Verfahren zur Herstellung einer elektrochromen Platte, die zwei flexible Elektroden (2) und einen hermetisch abgeschlossenen Raum zwischen den beiden flexiblen Elektroden umfasst, wobei mindestens eine der beiden flexiblen Elektroden optisch transparent ist, wobei der hermetisch abgeschlossene Raum zwischen den beiden flexiblen Elektroden mit einer elektrochromen Zusammensetzung (1) gefüllt ist,
wobei das Verfahren umfasst:
(1) Herstellen einer anfänglichen elektrochromen Zusammensetzung in Form eines elektrochromen Dispersionssystems, das mindestens eine Suspension und/oder ein Kolloid enthält, wobei ein Dispersionsmedium des elektrochromen Dispersionssystems eine elektrochrome Lösung umfasst, die ein Hochtemperaturlösungsmittel und ein Niedertemperaturlösungsmittel, eine kathodische Komponente und eine anodische Komponente umfasst, wobei eine Dispersionsphase des elektrochromen Dispersionssystems ein fein verteiltes Polymer umfasst;
(2) Herstellen mindestens einer der beiden flexiblen Elektroden in einer solchen Weise, dass eine leitfähige Beschichtung auf ein polymeres Substrat aufgebracht wird, (3) in Form von gegenseitig isolierten leitfähigen Abschnitten einer quadratischen Form, die in einer Matrix angeordnet sind;
(3) Beschichten mindestens einer der flexiblen Elektroden mit der anfänglichen elektrochromen Zusammensetzung;
(4) Trocknen der auf die flexible(n) Elektrode(n) aufgebrachten elektrochromen Ausgangsmischung, um das Niedrigtemperatur-Lösungsmittel zu entfernen und eine feste, homogene, gleichmäßige elektrochrome Schicht zu bilden;
(5) Laminieren der flexiblen Elektrode mit der getrockneten elektrochromen Zusammensetzung mit der anderen flexiblen Elektrode;
(6) Verbinden aller Abschnitte der flexiblen Elektroden mit elektrisch leitenden Sammelschienen (7); und
(7) Versiegeln des hermetisch abgeschlossenen Raums zwischen den beiden flexiblen Elektroden.

2. Verfahren nach Anspruch 1, wobei die elektrochrome Lösung ferner einen indifferenten Elektrolyten umfasst.

3. Verfahren nach Anspruch 1, wobei die anfängliche elektrochrome Zusammensetzung auf mindestens eine der flexiblen Elektroden durch Schwerkraftverteilung, Tauchbeschichtung, Walzenbeschichtung, Tauchbeschichtung, Schleuderbeschichtung oder Fließbeschichtung aufgetragen wird.

4. Verfahren nach Anspruch 1, wobei das Hochtemperaturlösungsmittel und/oder das Niedrigtemperaturlösungsmittel einzeln oder in Kombination eine chemische Verbindung oder ein Gemisch chemischer Verbindungen umfassen.

5. Verfahren nach Anspruch 1, wobei die kathodische Komponente eine einzelne organische elektrochrome Verbindung mit Polarogrammen mit mindestens einer reversiblen Reduktionswelle ist.

6. Verfahren nach Anspruch 1, wobei die anodische Komponente eine einzelne organische elektrochrome Verbindung mit Polarogrammen mit mindestens einer reversiblen Oxidationswelle ist.

7. Verfahren nach Anspruch 1, das ferner ein Trocknen der aufgetragenen anfänglichen elektrochromen Zusammensetzung, um das Niedrigtemperatur-Lösungsmittel vollständig zu entfernen, um eine feste, aber flexible elektrochrome Schicht zu bilden.

8. Das Verfahren nach Anspruch 1, das ferner die Schritte des Auftragens einer halben Menge der anfänglichen elektrochromen Zusammensetzung auf jede der beiden flexiblen Elektroden, des Trocknens der aufgetragenen anfänglichen elektrochromen Zusammensetzung und des Laminierens einer ersten der beiden flexiblen Elektroden mit einer zweiten der beiden flexiblen Elektroden umfasst.

9. Verfahren nach Anspruch 1, wobei die anfängliche elektrochrome Zusammensetzung ferner ein UV-blockierendes Additiv umfasst.

10. Verfahren nach Anspruch 1, wobei die anfängliche elektrochrome Zusammensetzung ferner ein Antioxidationsmittel umfasst.

11. Verfahren nach Anspruch 1, ferner umfassend das Aufbringen einer Schutzschicht auf die elektrochrome Platte zum Schutz vor Infrarotstrahlung.

12. Verfahren nach Anspruch 1, wobei die zwei flexiblen Elektroden
Polymersubstrate umfassen, die auf einer Seite mit einer transparenten elektrisch leitenden Schicht aus dotiertem Indiumoxid oder dotiertem Zinnoxid beschichtet sind.

13. Verfahren nach Anspruch 12, wobei die Polymersubstrate, Polyethylenterephthalat-Substrate sind.

14. Verfahren nach Anspruch 12, wobei die zwei flexiblen Elektroden um den Umfang herum hermetisch verbunden sind, so dass sich die transparente elektrisch leitende Schicht innerhalb eines geschlossenen Raums befindet, der zwischen den beiden flexiblen Elektroden definiert ist.

15. Verfahren nach Anspruch 14, wobei das Band zwischen den beiden flexiblen Elektroden einen Abstandshalter umfasst, um einen vorgegebenen Abstand zwischen den beiden flexiblen Elektroden bereitzustellen.

## Revendications

1. Procédé de fabrication d'un panneau électrochrome comprenant deux électrodes flexibles (2) et un espace hermétiquement fermé entre les deux électrodes flexibles, au moins une des deux électrodes flexibles étant optiquement transparente, dans lequel l'espace hermétiquement fermé entre les deux électrodes flexibles est rempli d'une composition électrochrome (1), le procédé comprenant :
(1) préparer une composition électrochrome initiale sous la forme d'un système de dispersion électrochrome contenant au moins l'un d'une suspension et d'un colloïde, dans lequel le milieu de dispersion du système de dispersion électrochrome comprend une solution électrochrome comprenant un solvant à haute température et un solvant à basse température, un composant cathodique et un composant anodique, dans lequel une phase de dispersion du système de dispersion électrochrome comprend un polymère finement divisé ;
(2) fabriquer au moins une des deux électrodes flexibles de manière à ce qu'un revêtement conducteur soit appliqué sur un substrat polymère (3) sous la forme de portions conductrices de forme carrée disposées dans une matrice et isolées mutuellement ;
(3) revêtir au moins une des électrodes flexibles avec la composition électrochrome initiale ;
(4) sécher la composition électrochrome initiale appliquée sur la ou les électrodes flexibles pour éliminer le solvant à basse température afin de former une couche électrochrome solide, homogène et uniforme ;
(5) laminer l'électrode flexible avec la composition électrochrome séchée avec l'autre électrode flexible ;
(6) connecter toutes les parties des électrodes flexibles à des bus (7) électriquement conducteurs ; et
(7) sceller l'espace hermétiquement fermé entre les deux électrodes flexibles.

2. Procédé selon la revendication 1, dans lequel la solution électrochrome comprend en outre un électrolyte indifférent.

3. Procédé selon la revendication 1, dans lequel la composition électrochrome initiale est enduite sur l'une au moins des électrodes flexibles par étalement gravitationnel, enduction par immersion, enduction au rouleau, enduction par trempage, enduction par centrifugation, ou enduction par écoulement.

4. Procédé selon la revendication 1, dans lequel le solvant à haute température et/ou le solvant à basse température comprennent, individuellement ou en combinaison, un composé chimique ou un mélange de composés chimiques.

5. Procédé selon la revendication 1, dans lequel le composant cathodique est un composé électrochrome organique individuel ayant au polarogramme au moins une onde de réduction réversible.

6. Procédé selon la revendication 1, dans lequel le composant anodique est un composé électrochrome organique individuel ayant aux polarogrammes au moins une onde d'oxydation réversible.

7. Procédé selon la revendication 1, comprenant en outre un séchage de la composition électrochrome initiale appliquée pour éliminer complètement le solvant à basse température afin de former une couche électrochrome solide mais flexible.

8. Procédé selon la revendication 1, comprenant en outre les étapes d'application d'une demi quantité de la composition électrochrome initiale sur chacune des deux électrodes flexibles ; de séchage de la composition électrochrome initiale appliquée ; et de laminage d'une première des deux électrodes flexibles avec une seconde des deux électrodes flexibles.

9. Procédé selon la revendication 1, dans lequel la composition électrochrome initiale comprend en outre un additif bloquant les ultraviolets.

10. Procédé selon la revendication 1, dans lequel la composition électrochrome initiale comprend en outre un antioxydant.

11. Procédé selon la revendication 1, comprenant en outre l'application sur le panneau électrochrome d'une couche de protection contre le rayonnement infrarouge.

12. Procédé selon la revendication 1, dans lequel les deux électrodes flexibles comprennent des substrats polymères revêtus sur l'une de leurs faces d'une couche transparente électriquement conductrice en oxyde d'indium dopé ou en oxyde d'étain dopé.

13. Procédé selon la revendication 12, dans lequel les substrats polymères sont des substrats de polyéthylène téréphtalate.

14. Procédé selon la revendication 12, dans lequel les deux électrodes flexibles sont hermétiquement liées sur le périmètre de sorte que la couche électriquement conductrice transparente est située dans un espace fermé défini entre les deux électrodes flexibles.

15. Procédé selon la revendication 14, dans lequel la liaison entre les deux électrodes flexibles comprend une entretoise pour fournir une distance prédéterminée entre les deux électrodes flexibles.
